# EUROPEAN PATENT SPECIFICATION

(11) **EP 1 072 667 B1**
(45) Date of publication and mention of the grant of the patent: **28.04.2004**
(21) Application number: 00420154.7
(22) Date of filing: 06.07.2000
(51) Int. Cl.: C09K 3/18, C03C 17/34, B01J 20/26

(54) **Thermo-reversible material and method for preparing it**
Thermoreversibles Material und Verfahren zu seiner Herstellung
Produit thermo-reversible et procédé pour le préparer

(30) Priority: 30.07.1999 FR 9910148
(43) Date of publication of application: 31.01.2001
(73) Proprietor: EASTMAN KODAK COMPANY, Rochester, New York 14650 (US)
(72) Inventor: Poncelet, Olivier Jean Christian, 71102 Chalon sur Saone Cedex (FR)
(74) Representative: Weber, Etienne Nicolas

(56) References cited:
- EP-A- 0 534 016
- EP-A- 0 599 150
- WO-A-98/29461
- US-A- 4 683 258
- US-A- 5 432 245
- PATENT ABSTRACTS OF JAPAN vol. 017, no. 552 (M-1491), 5 October 1993 (1993-10-05) & JP 05 154958 A (AGENCY OF IND SCIENCE & TECHNOL), 22 June 1993 (1993-06-22)

## Description

### FIELD OF THE INVENTION

The present invention relates to a material that can be either hydrophilic or hydrophobic depending on the temperature, and to a method for obtaining said material. The present invention also relates to the use of this material for the decontamination of effluents and waste waters.

### BACKGROUND OF THE INVENTION

Substances displaying temperature-dependent hydrophilic or hydrophobic characteristics are known, such as thermo-reversible polymers.

Thermo-reversible polymers can shift from an initial state to a final state by either heating or cooling, depending on the initial state of the polymer. Thermo-reversible polymers, above a phase transition temperature called the Lower Critical Solution Temperature (LCST), change from a hydrophilic state to a hydrophobic state. These polymers possess a hydrophilic moiety and a hydrophobic moiety.

These polymers can find various applications, particularly for effluent decontamination.

Conventionally, for such applications, the thermo-reversible polymers can be adsorbed on suitable supports, made of glass, plastics or metal. This adsorption does not afford stable or permanent deposits or layers, i.e., a thermo-reversible polymer adsorbed on a support will not adhere sufficiently on that support.

Thermo-reversible polymers can also be polymerized *in situ* on a support. For example, the surface of a support can be impregnated with a monomer solution, and then this monomer can be polymerized, as described by K. Ista et al. in Applied and Environmental Biology, 1999, page 1603. However, this method does not guarantee the adhesion and stability of the polymer layer obtained, nor does it allow a high degree of control over the properties of the polymer itself (e.g., its molecular weight, or its polydispersity, and thus its physical or mechanical properties).

The use of these thermo-reversible polymers thus raises difficulties, which could be overcome by establishing a stable binding between the thermo-reversible polymers and a support, without adversely affecting the thermo-reversibility of the polymers.

It would therefore be desirable to be able to fix the polymer to the support so as to overcome the difficulties stated above.

### SUMMARY OF THE INVENTION

The object of the present invention is a material that have temperature-dependent hydrophilic and hydrophobic characteristics and comprises a support having grafted thereon a layer of a thermo-reversible polymer thereon preferably by means of at least one covalent bond.

A further object of the present invention is a method that comprises the step of grafting a thermo-reversible polymer onto a support, in particular by a reaction that generates covalent bonds between the thermo-reversible polymer and the support.

In one embodiment, the material of the invention comprises a support having grafted thereon surface groups represented by the structure:

- O-Link-P

where Link represents the radical of an bonding compound able to form a covalent bond with the OH groups present at the surface of the support, and P represents the radical of a thermo-reversible polymer.

In one embodiment the grafting step is performed by means of an intermediate compound that comprises (i) a first function able to react with the support and form with it a covalent bond, and (ii) a second function able to react with the thermo-reversible polymer and form with it a covalent bond. The grafting method of the invention thus comprises a first step in which the support is allowed to react with one or more intermediate compounds, and a second step in which the support treated in first step is allowed to react with a thermo-reversible polymer.

### BRIEF DESCRIPTION OF THE DRAWINGS

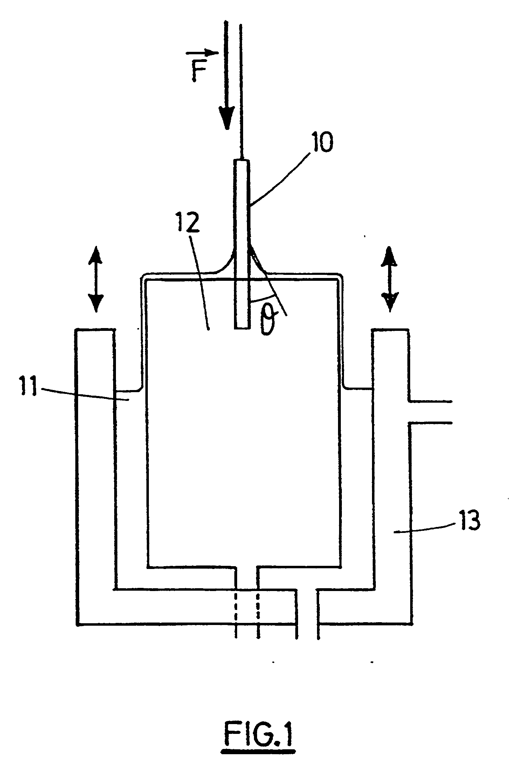

Figure 1 depicts a device to measure the wetting angle of an element made up of a support bearing a grafted layer of thermo-reversible polymer.

### DETAILED DESCRIPTION OF THE INVENTION

A known class of thermo-reversible polymers, described in Macromol Chem. Phys. 199, 137, pages 1387-1392 by G. Bokias et al (1998), results from the polymerization of monomers of the formula; 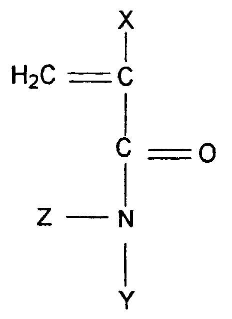 where X is H or CH₃, Z and Y are H or a linear or branched, alkyl group containing from 1 to 6 atoms of carbon, a cycloalkyl group containing from 3 to 7 carbons, or an aryl group containing from 6 to 10 carbons, Z and Y cannot both be H, and Z and Y can be combined to form a nitrogen-containing heterocycle.

In one embodiment, the thermo-reversible polymer is a polymer or copolymer of N-alkylmethacrylamide or N-alkylacrylamide, where the alkyl group is a linear or branched alkyl group containing from 1 to 6 atoms of carbon, such as methyl, ethyl, n-propyl, isopropyl, n-butyl, etc.

In addition, the thermo-reversible polymers used in the invention have a function that allows them to be grafted by the method described above. The grafting step through a reaction between an intermediate compound grafted onto the support, and an amino or carboxy function, for example located at the end of the chain of the polymer.

The poly-N-alkylacrylamide-type polymers used in the invention have preferably a low LCST. Above this temperature, they are hydrophobic and contract in water. Below this temperature, they hydrate and become hydrophilic (hydrogels). By low LCST is meant a temperature between 20°C and 70°C, preferably between 30°C and 40°C.

One consequence of the above is that the initial properties of the polymer are conditioned by the temperature at which the polymerization was carried out. If the polymerization is carried out at a temperature above the LCST, an opaque hydrophobic polymer is obtained. If the polymerization is carried out below the LCST, a transparent hydrogel (hydrophilic gel) is obtained. When as it is heated to above the LCST, this initially transparent gel contracts and becomes opaque and hydrophobic.

A poly(N-isopropylacrylamide) can for example be obtained in the following way, described by Tanaka and Fillmore in J. Chem. Phys. 70(03), February 1 1979, or by G. Bokias et al., in Macromol. Chem. Phys., 199, 1387-92 (1998). A monomer is dissolved in osmosed degassed water. To this solution is added a cross-linking agent such as N,N'-methylenebisacrylamide or dihydroxyethylenebis-acrylamide, a polymerization initiator or accelerator, such as sodium persulfate, 2,2-azobis-isobutyronitrile, tetramethylethylenediamine, ammonium peroxodisulfate or sodium metabisulfite type.

A radical polymerization reaction yields the polymer in a few minutes. Combinations of two or more initiators can preferably be used, such as a combination of sodium peroxodisulfate and tetramethylethylene diamine, or a combination of ammonium peroxodisulfate and sodium metabisulfite. Such combinations allow better control over the molecular weight and make it possible to carry out the synthesis at a temperature below the LCST and thereby directly obtain the polymer in a hydrophilic form. In one embodiment the monomer solution is placed in contact with the solution containing the initiator and the cross-linking agent.

According to the invention, the intermediate bonding compound is any suitable reagent able to generate a bond with both the support and the thermo-reversible polymer. For example, the intermediate bonding compound can be a chlorosilane of formula ClₓSi(R¹Cl)₄₋ₓ, where R¹ is an alkyl group containing 1 to 10 atoms of carbon, an aryl group, an alkaryl group or an aralkyl group with an alkyl radical containing 1 to 6 atoms of carbon and x is equal to 1, 2 or 3, or a chloroalkyl group. With a chlorosilane of formula Cl₃SiR¹Cl as indicated above, a covalent bond can be formed between the SiCl₃ radicals and the OH groups of the support, and a covalent bond between the radical R¹Cl and a hydroxy, mercapto, amino, etc. radical of the thermo-reversible polymer.

The support can be any substance that possesses the required mechanical properties and the surface functions to allow the subsequent grafting. Suitable supports are in particular those that possess surface OH functions, for example glass (silica), silico-aluminate, alumina, titanium, zirconium or germanium oxide supports.

In a preferred embodiment of the invention, the support is made of glass or silicon the surface of which comprises an oxidation layer rich in OH functions. Such a surface layer can be obtained for example by the oxidation of the support in the ambient atmosphere. The support is then allowed to react with an intermediate bonding compound. For example, with a chlorosilane, the following reaction is believed to take place : 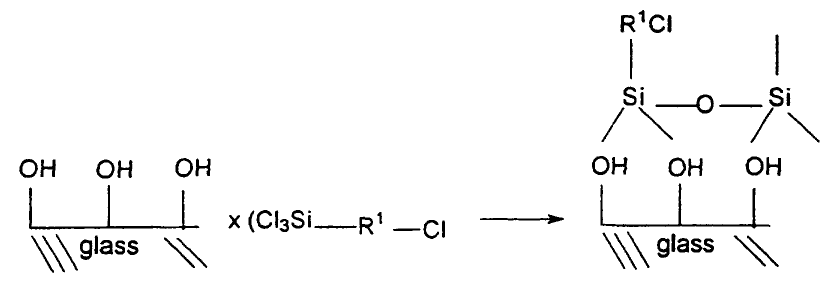 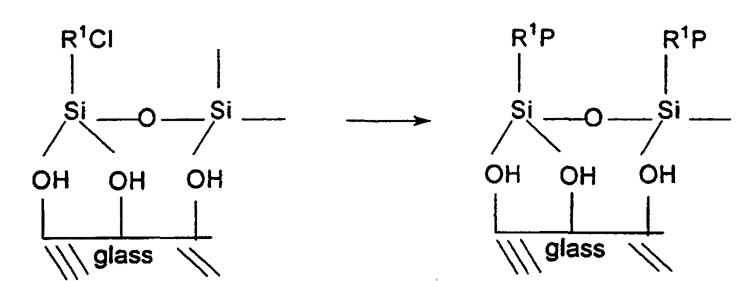 where R¹ is as defined above and P is the radical of the thermo-reversible polymer.

In another embodiment, the support can be allowed to react with a mixture of one comprising the intermediate bonding compound as defined above and a second compound able to react with the support but inert towards the polymer. The amount of this second compound is determined so that only a part of the surface OH groups of the support will be substituted with this compound. Alternativey, an amount of this compound can be reacted with the support before the support is reacted with the intermediate bonding compound. In this way, the quantity of grafted thermo-reversible polymer and the hydrophobic characteristics of the material can be controlled. The second compound, that is inert towards the thermo-reversible polymer, bears a function able to react with the OH groups of the support by forming a covalent bond, but bears no function able to react with the thermo-reversible polymer. For instance, the second compound bears a hydrophobic end group. This second compound can have the formula Cl₃SiR², where R² is an alkyl group containing 1 to 10 atoms of carbon, a fluoroalkyl or perfluoroalkyl group, for example a trifluoroalkyl group containing 1 to 10 atoms of carbon, an aralkyl group, a cycloalkyl group or an aryl group.

The material of the invention can be used for effluent decontamination. In an embodiment, the material of the invention can be used for the extraction of organic substances present an aqueous effluent, so that this effluent can be recycled or discarded.

### EXAMPLE 1 - Preparation of poly(N-isopropyl)acrylamide with a terminal amino group.

In 200 ml of water was dissolved 20 g of N-isopropylacrylamide (NIPAM) (0.9 M solution) at 27°C, with moderate stirring, and a stream of argon was bubbled through the solution for 1 h 30 min.

The following were prepared:
(1) a solution of 0.41 g of cysteamine chloride in 3 ml of water (2 mole % relative to NIPAM), and
(2) a solution of 0.82 g of ammonium peroxodisulfate in 3 ml of water (2 mole % relative to NIPAM).

Solution (1) was added to the NIPAM solution, followed 5 minutes later by solution (2).

Polymerization was carried out under an argon atmosphere with stirring at 27°C.

After 4 hours, the reaction medium was placed in a dialysis bag (6000 D), which was immersed in a 16-liter tank fed with running water. The dialysis was carried out for 12 hours and the solution was then gelled and freeze-dried.

The polymer obtained had an average molecular weight of 1,000,000 measured by SEC chromatography as described by G. Bokias et al. in Macromol. Chem. Phys. 199, 1387-92 (1998). A 1 M solution of this polymer in water was prepared. The thermo-reversibility of the polymer was checked by visual examination. The LCST, measured by visual examination was 33°C. The visual examination was conducted as follows: A solution of 0.5 g of polymer was made up in water. This solution was transparent at ordinary temperature. When the solution was heated to above the LCST it became opaque. The thermo-reversibility was additionally checked by Raman spectrography: when the polymer reached a temperature greater than the LCST, the CH bond peak was shifted towards lower cm⁻¹ values.

### EXAMPLE 2

The polymer obtained in example 1 was grafted onto a glass plate in the following way.

A glass plate (25 x 25 x 1 mm) was dipped in chloroform and then water to clean it. It was then dried and dipped in a 1:3 mixture by volume of hydrofluoric acid and water. The plate was rinsed and dried. The purpose of the hydrofluoric acid treatment is to form OH groups on the glass surface.

Under an argon atmosphere was prepared a solution of 0.4 ml of a mixture of 33% (p-chloromethyl)phenyltrichlorosilane and 67% trifluorodecyltrichlorosilane in 120 ml of anhydrous chloroform (molar ratio 1:1).

The two solutions above were mixed under an argon atmosphere, and the glass plate, conditioned as described above, was soaked in the mixture for two minutes. Infrared analysis showed that the plate had about twice as many (p-chloromethyl)phenyl)Si sites as (trifluorodecyl)Si sites. The glass plate was then immersed for between 15 minutes and 2 hours in a solution of 2 g of the polymer prepared in example 1. It was then rinsed with chloroform. The reversible polymer grafted onto the glass through the silane intermediate was then tested to make sure its thermo-reversible properties were conserved, by measuring the water wetting angle versus temperature.

When the temperature increased between 30 and 40°C, so exceeding the LCST (33°C), the wetting angle increased from 82 to 94°, thus indicating that the polymer had become hydrophobic. Numerous successive temperature cycles could be performed. The results for the wetting angle are set out in Table I.

### EXAMPLE 3

The operating procedure of example 2 was followed except that the glass plate was immersed in a solution of 0.5 g of (p-chloromethyl)phenyltrichlorosilane in 120 ml of water. A glass plate was obtained that had only [(p-chlorophenyl)phenyl]Si sites, according to the operating procedure of example 2. The water wetting angle remained constant at 88° when the glass plate was heated from 30°C to 40°C, i.e., to above the LCST.

The results for the wetting angle are set out in Table I.

### Measurement of the wetting angle

This is a dynamic measurement of the wetting angle carried out by the method of Wilhemy described by Adamson in *Forces interfaciales en milieux aqueux*, by C.J. Van Oss, Editions Masson, Paris, 1996.

As shown in Figure 1, the plate (10) is suspended vertically just above the liquid (11) contained in an overflow vessel (12). The weight of the plate is measured and transmitted to a chart recorder that is not depicted. The whole set-up is placed in a thermostat tank (13). The vessel (12) is moved vertically upwards. When the plate comes into contact with the liquid, a weak additional force F, positive or negative, is exerted, and a variation in the weight of the plate is transmitted to the chart recorder, which records a deviation that is proportional to the wetting angle θ. The surface tension is deduced from θ using the formula γ = Δ/Wpcosθ, where ΔW is the variation in weight of the plate and P is the perimeter of the plate.

**TABLE I**

| **Material** | **θ**_{**1**} | **θ**_{**2**} |
|---|---|---|
| Cleaned glass | 2 | 2 |
| Glass treated with silane | 88 | 88 |
| Glass with grafted polymer | 92 | 94 |
| θ1 = wetting angle at 30°C in water | | |
| θ₂ = wetting angle at 40°C in water | | |

The invention has been described in detail with particular reference to certain preferred embodiments thereof, but it will be understood that variations and modifications can be effected within the scope of the invention.

## Claims

1. Method for preparing a material comprising a support having grafted thereon a layer of a thermo-reversible polymer, said method comprising the steps of :
a) providing a support having surface OH groups ;
b) allowing this support to react with an bonding compound comprising (i) a first function able to form a covalent bond with the surface OH groups of the support, and (ii) a second function able to form another covalent bond with the thermo-reversible polymer, and
c) allowing the thermo-reversible polymer to react with the product obtained in step (a).

2. Method according to claim 1, **characterized in that** before or during step (b) the support is allowed to react with a compound that comprises a function able to form a covalent bond with the surface OH groups of the support, but that is inert towards the thermo-reversible polymer.

3. Method according to any of claims 1 or 2, **characterized in that** the support is made of silica, alumina, germanium oxide, titanium oxide, or silicon or germanium, the surface of which bears OH functions.

4. Method according to any of claims 1-3, **characterized in that** the thermo-reversible polymer results from the polymerization of a monomer of formula: 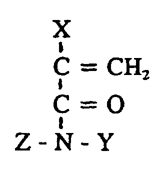 where X is H or CH₃, Z and Y each represent an atom of hydrogen or a straight-chain or branched alkyl group containing 1 to 6 atoms of carbon, Z and Y can be combined to form a heterocycle, and Z and Y cannot both be H.

5. Method according to claim 4, **characterized in that** the bonding compound is selected among the chlorosilanes and chloroalkoxides.

6. Method according to claim 3 or 4, **characterized in that**, the support is reacted with a mixture of (i)
Cl₃Si-R¹-Cl
where R' is an alkyl group containing 1 to 10 atoms of carbon, an aryl group containing 6 to 10 atoms of carbon, an aralkyl group, with an alkyl group containing I to 6 atoms of carbon, an alkaryl group, with an alkyl group containing 1 to 6 atoms of carbon, and (ii) a compound able to react with the support, but inert towards the thermo-reversible polymer, having the formula:
Cl₃-Si-R²
where R² is an alkyl group containing 1 to 10 atoms of carbon, or a trifluoroalkyl group containing 1 to 10 atoms of carbon.

7. Material comprising a support having grafted thereon a layer of a thermo-reversible polymer having a phase transition temperature designated as the Lower Critical Solution Temperature (LCST) and being hydrophilic below the LCST and hydrophobic above the LCST, wherein said thermo-reversible polymer is grafted on said support by groups having the structure: -O-X-P, where P represents the radical of a thermo-reversible polymer and X is a radical of an intermediate bonding compound.

8. Material according to claim 7, **characterized in that** the support is selected from the group comprising silica, zirconium oxide, germanium oxide, titanium oxide, alumina, silico-aluminates, and silicon or germanium.

9. Material according to any of claims 7 to 8, **characterized in that** the thermo-reversible polymer results from the polymerization of a monomer of formula: 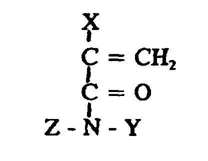 where X is H or CH₃, Z and Y each represent an atom of hydrogen or a straight-chain or branched.alkyl group containing 1 to 6 atoms of carbon, Z and Y can be combined to form a heterocycle, and Z and Y cannot both be H.

10. Method for the extraction of organic compounds from an aqueous mixture **characterized in that** the aqueous mixture is placed in contact with a material according to any of the claims 7 to 9.

## Patentansprüche

1. Verfahren zur Herstellung eines Materials mit einem Träger, auf den eine Schicht eines thermoreversiblen Polymeren aufgepfropft ist, wobei das Verfahren die Stufen umfasst:
a) Bereitstellung eines Trägers mit Oberflächen-OH-Gruppen;
b) Reaktion dieses Trägers mit einem Haftmittel mit (i) einer ersten Funktion, bereit zur Bildung einer kovalenten Bindung mit den Oberflächen-OH-Gruppen des Trägers, und (ü) einer zweiten Funktion, bereit zur Erzeugung einer anderen kovalenten Bindung mit dem thermoreversiblen Polymeren, und
c) Reaktion des thermoreversiblen Polymeren mit dem Produkt, das in Stufe (a) erhalten wurde.

2. Verfahren nach Anspruch 1, **dadurch gekennzeichnet, dass** der Träger vor oder während der Stufe (b) mit einer Verbindung reagieren kann, die eine Funktion aufweist, die eine kovalente Bindung mit den Oberflächen-OH-Gruppen des Trägers zu erzeugen vermag, die jedoch inert bezüglich des thermoreversiblen Polymeren ist.

3. Verfahren nach einem der Ansprüche 1 oder 2, **dadurch gekennzeichnet, dass** der Träger hergestellt ist aus Siliziumdioxid, Aluminiumoxid, Germaniumoxid, Titanoxid oder Silizium oder Germanium, wobei die Oberfläche OH-Funktionen aufweist.

4. Verfahren nach einem der Ansprüche 1-3, **dadurch gekennzeichnet, dass** das thermo-reversible Polymer erhalten wird durch Polymerisation eines Monomeren der Formel: 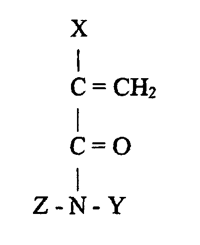 worin X für H oder CH₃ steht, Z und Y jeweils ein Wasserstoffatom oder eine geradkettige oder verzweigtkettige Alkylgruppe mit 1 bis 6 Kohlenstoffatomen darstellen, und wobei Z und Y unter Erzeugung eines heterocyclischen Ringes miteinander kombiniert sein können, und wobei Z und Y nicht beide für H stehen können.

5. Verfahren nach Anspruch 4, **dadurch gekennzeichnet, dass** das Haftmittel ausgewählt ist aus Chlorosilanen und Chloroalkoxiden.

6. Verfahren nach Anspruch 3 oder 4, **dadurch gekennzeichnet, dass** der Träger umgesetzt wird mit einer Mischung von (i)
Cl₃Si-R¹-Cl
worin R¹ eine Alkylgruppe mit 1 bis 10 Kohlenstoffatomen ist, eine Arylgruppe mit 6 bis 10 Kohlenstoffatomen, eine Aralkylgruppe mit einer Alkylgruppe mit 1 bis 6 Kohlenstoffatomen, eine Alkarylgruppe mit einer Alkylgruppe mit 1 bis 6 Kohlenstoffatomen und (ii) einer Verbindung, die mit dem Träger zu reagieren vermag, jedoch inert bezüglich des thermoreversiblen Polymeren ist, mit der Formel:
Cl₃-Si-R²
worin R² eine Alkylgruppe mit 1 bis 10 Kohlenstoffatomen ist oder eine Trifluoroalkylgruppe mit 1 bis 10 Kohlenstoffatomen.

7. Material mit einem Träger mit einer aufgepfropften Schicht aus einem thermoreversiblen Polymeren mit einer Phasen-Übergangstemperatur, bezeichnet als die untere kritische Lösungstemperatur (LCST) und das hydrophil unterhalb der LCST-Temperatur ist und hydrophob über der LCST-Temperatur, wobei das thermoreversible Polymer auf den Träger aufgepfropft ist durch Gruppen mit der Struktur: -O-X-P, worin P für den Rest eines thermoreversiblen Polymeren steht und worin X ein Rest eines intermediären Haftmittels ist.

8. Material nach Anspruch 7, **dadurch gekennzeichnet, dass** der Träger ausgewählt ist aus der Gruppe bestehend aus Siliziumdioxid, Zirkoniumoxid, Germaniumoxid, Titanoxid, Aluminiumoxid, Siliziumaluminaten und Silizium oder Germanium.

9. Material nach einem der Ansprüche 7 bis 8, **dadurch gekennzeichnet, dass** das thermo-reversible Polymer erhalten wird durch Polymerisation eines Monomeren der Formel: 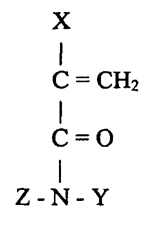 worin X für H oder CH₃ steht, Z und Y jeweils ein Wasserstoffatom oder eine geradkettige oder verzweigtkettige Alkylgruppe mit 1 bis 6 Kohlenstoffatomen darstellen, wobei Z und Y unter Erzeugung einer heterocyclischen Gruppe kombiniert sein können, und wobei Z und Y nicht beide für H stehen können.

10. Verfahren zur Extraktion von organischen Verbindungen aus einer wässrigen Mischung, **dadurch gekennzeichnet, dass** die wässrige Mischung in Kontakt mit einem Material nach einem der Ansprüche 7 bis 9 gebracht wird.

## Revendications

1. Procédé de préparation d'un produit comprenant un support sur lequel est greffée une couche de polymère thermoréversible, ledit procédé comprenant les étapes suivantes :
(a) la fourniture d'un support ayant des groupes OH en surface ;
(b) la réaction de ce support avec un composé de liaison comprenant (i) une première fonction capable de former une liaison covalente avec les groupes OH à la surface du support, et (ii) une seconde fonction capable de former une autre liaison covalente avec le polymère thermoréversible ; et
(c) la réaction du polymère thermoréversible avec le produit obtenu à l'étape (a).

2. Procédé selon la revendication 1, **caractérisé en ce que**, avant ou pendant l'étape (b), on fait réagir le support avec un composé comprenant une fonction capable de former une liaison covalente avec les groupes OH à la surface du support, mais incapable de réagir avec le polymère thermoréversible.

3. Procédé selon l'une quelconque des revendications 1 ou 2, **caractérisé en ce que** le support est un support de silice, d'alumine, d'oxyde de germanium, d'oxyde de titane, de silicium ou de germanium dont la surface porte une couche riche en fonctions OH.

4. Procédé selon l'une quelconque des revendications 1 à 3, **caractérisé en ce que** le polymère thermoréversible résulte de la polymérisation d'un monomère répondant à la formule : 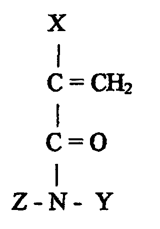 où X est H ou CH₃ ; Z et Y représentent chacun un atome d'hydrogène ou un groupe alkyle linéaire ou ramifié de 1 à 6 atomes de carbone, Z et Y peuvent être combinés pour former un hétérocycle, à la condition que Z et Y ne représentent pas tous deux H.

5. Procédé selon la revendication 4, **caractérisé en ce que** le composé de liaison est choisi parmi les chlorosilanes et les chloroalcoxydes.

6. Procédé selon la revendication 3 ou 4, **caractérisé en ce que** l'on fait réagir le support avec un mélange de (i)
Cl₃Si-R¹-Cl
où R¹ représente un groupe alkyle de 1 à 10 atomes de carbone ; un groupe aryle de 6 à 10 atomes de carbone, un groupe aralkyle, avec un groupe alkyle de 1 à 6 atomes de carbone, un groupe alkaryle, avec un groupe alkyle de 1 à 6 atomes de carbone, et (ü) un composé capable de réagir avec le support mais incapable de réagir avec le polymère thermoréversible, répondant à la formule :
Cl₃Si-R²
où R² représente un groupe alkyle de 1 à 10 atomes de carbone ou un groupe trifluoroalkyle de 1 à 10 atomes de carbone.

7. Produit comprenant un support sur lequel est greffée une couche d'un polymère thermoréversible ayant une température de transition de phase appelée LCST (lower critical solution temperature) et étant hydrophile au-dessous de la LCST et hydrophobe au-dessus de la LCST, où ledit polymère thermoréversible est greffé sur ledit support par des groupes ayant la structure : -O-X-P, où P représente le radical d'un polymère thermoréversible et X est un radical d'un composé intermédiaire de liaison.

8. Produit selon la revendication 7, **caractérisé en ce que** le support est choisi parmi le groupe comprenant la silice, l'oxyde de zirconium, l'oxyde de germanium, l'oxyde de titane, l'alumine, les silico-aluminates et le silicium ou le germanium.

9. Produit selon l'une quelconque des revendications 7 à 8, **caractérisé en ce que** le polymère thermoréversible résulte de la polymérisation d'un monomère qui répond à la formule : 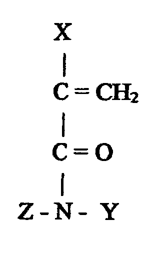 où X est H ou CH₃ ; Z et Y représentent chacun un atome d'hydrogène ou un groupe alkyle linéaire ou ramifié de 1 à 6 atomes de carbone, Z et Y peuvent être combinés pour former un hétérocycle, à la condition que Z et Y ne représentent pas tous deux H.

10. Procédé d'extraction de composés organiques à partir d'un mélange aqueux, **caractérisé en ce que** l'on met ce mélange aqueux en contact avec un produit conforme à l'une quelconque des revendications 7 à 9.
